# EUROPÄISCHE PATENTSCHRIFT

(11) **EP 3 140 202 B1**
(45) Veröffentlichungstag und Bekanntmachung des Hinweises auf die Patenterteilung: **20.05.2020**
(21) Anmeldenummer: 15724531.7
(22) Anmeldetag: 06.05.2015
(51) Int. Cl.: B65B 39/00, B65B 39/12, B65B 3/00, B65B 3/04, B65B 3/26, F16K 31/08

(54) **FÜLLNADEL ZUM BEFÜLLEN EINES BEHÄLTERS MIT EINEM FLUID**
FILLING NEEDLE FOR FILLING A CONTAINER WITH A FLUID
AGUILLE DE REMPLISSAGE POUR REMPLIR UN RÉCIPIENT AVEC UN FLUIDE

(30) Priorität: 09.05.2014 DE 102014106582
(43) Veröffentlichungstag der Anmeldung: 15.03.2017
(73) Patentinhaber: Groninger GmbH&Co. KG, 91625 Schnelldorf (DE)
(72) Erfinder: GLOCK, Ralf, 74594 Kressberg/Rudolfsberg (DE); SCHUHMACHER, Johannes, 74673 Mulfingen (DE)
(74) Vertreter: Witte, Weller & Partner Patentanwälte mbB
(86) Internationale Anmeldenummer: PCT/EP2015/059981
(87) Internationale Veröffentlichungsnummer: WO 2015/169865

(56) Entgegenhaltungen:
- EP-A2- 1 985 900
- WO-A1-92/08919
- WO-A1-2013/057695
- DE-A1- 3 900 955
- DE-A1- 4 227 980
- DE-A1- 19 716 980
- DE-T2- 69 025 466
- DE-U1- 9 015 711
- JP-A- 2001 012 644
- US-A- 5 450 877
- US-A1- 2006 261 300

## Beschreibung

Die vorliegende Erfindung betrifft eine Füllnadel zum Befüllen eines Behälters mit einem Fluid, insbesondere einem pharmazeutischen oder kosmetischen Fluid, mit einem Gehäuse, wobei sich das Gehäuse entlang einer Längsachse erstreckt und eine Eintrittsöffnung und eine Austrittsöffnung aufweist, einem Kernelement, das innerhalb des Gehäuses parallel zu der Längsachse zwischen einer Öffnungsposition und einer Verschlussposition verschiebbar angeordnet ist, einem Stempelelement, das mit dem Kernelement gekoppelt ist, insbesondere mit dem Kernelement verbunden und zusammen mit dem Kernelement verschiebbar ist, wobei das Stempelelement die Austrittsöffnung in der Verschlussposition verschließt und in der Öffnungsposition freigibt, und einer Betätigungsanordnung zum Verschieben des Kernelements zwischen der Öffnungsposition und der Verschlussposition.

Derartige Füllnadeln sind im Stand der Technik allgemein bekannt. Sie werden dazu verwendet, beispielsweise Fluide zur pharmazeutischen oder kosmetischen Verwendung in Behälter abzufüllen. Insbesondere werden die Füllnadeln dazu zunächst durch eine Öffnung in einen Innenraum der Behälter eingeführt und während des Füllvorgangs vorzugsweise sukzessive aus dem Behälter zurückgezogen, um ein Befüllen des Behälters auch durch kleine Öffnungen und ohne Spritzverluste zu ermöglichen.

In Füllanlagen können dazu ein oder mehrere Füllnadeln vorgesehen sein, um eine entsprechende Anzahl von Behältern gleichzeitig zu befüllen.

Ein Beispiel für eine Vorrichtung und ein Verfahren zum Befüllen von Behältnissen zeigt etwa die Druckschrift DE 10 2006 019 518 A1. Dort wird eine Vorrichtung und ein Verfahren zum Befüllen von Behältnissen vorgeschlagen, die zumindest eine Fülleinrichtung, die über eine Füllnadel Flüssigkeit zu zumindest einem zu befüllenden Behältnis zuführt, aufweist, wobei die Füllnadel zum kompletten Befüllen des Behältnisses verwendet ist. Des Weiteren soll eine Antriebsvorrichtung vorgesehen sein, die die Füllnadel während des Füllvorgangs bewegt.

Des Weiteren zeigt beispielsweise die Druckschrift DE 42 27 980 A1 eine Vorrichtung zum Eindosieren eines Mediums in einen Behälter aus zumindest einer Düse oder dergleichen, welche über zumindest eine Leitung mit einer Dosiereinrichtung verbunden ist, die an einen Vorratsbehälter anschließt. Die Düse soll dabei in Abhängigkeit der Tätigkeit einer Fördereinrichtung mit dem Behälter während des Eindosierens mitlaufen.

Des Weiteren zeigt die Druckschrift DE 92 07 051 U1 eine Vorrichtung zum Abfüllen von Flüssigkeiten höherer Viskosität in einen Vorratsbehälter für die Flüssigkeit, von dem eine Leitung zu einer Pumpe abgeht, die in einen Füllstutzen mündet. Dabei soll vor dem Füllstutzen in die Leitung ein Absperrventil zwischengeschaltet sein, wobei das Absperrventil ein Magnetventil sein soll, dessen Öffnungsdauer veränderbar ist. Das Magnetventil soll durch ein einstellbares Zeitrelais betätigt werden.

Allgemein werden somit Magnetventile vorgeschlagen, um Leitungen betätigbar zu versperren oder freizugeben. Die Magnetventile sind dabei durchweg zwischen einem Vorratsbehälter und einer Fülleinrichtung angeordnet. Weitere derartige allgemein in Fluidkreisläufen angeordnete Magnetventile zeigen beispielsweise die Druckschriften DE 32 27 616 A1 und DD 15 98 41 A1.

Die Druckschrift DE 690 25 466 T2 zeigt ein aseptisches Füllventil mit einem Ventilsitz, der innerhalb eines Rohrteiles angeordnet ist, einem inneren beweglichen Teil, das in dem Rohrteil angeordnet ist und ein Ventilkörper aufweist, mit einem äußeren beweglichen Teil, das außerhalb des Rohrteiles angeordnet und mit dem inneren beweglichen Teil magnetisch gekoppelt ist.

Des Weiteren zeigt die Druckschrift US 2006/261300 A1 ein Ventil mit einem Körper, innerhalb dem eine Nadel bewegbar ist, die mit einer Dichtung an einem Sitz anliegen kann, der an den Körper befestigt ist.

Des Weiteren zeigt die Druckschrift US 5,450,877 ein Ventil das ein rohrförmigen Körper aufweist, der aus einem nicht magnetischen Material hergestellt ist, einen von dem rohrförmigen Körper getragenen Sitz um ein Verschlusselement, das innerhalb des rohrförmigen Körpers angeordnet ist und zu dem Sitz weist, wobei das Verschlusselement ein Ventilelement aufweist, das mit einem Antriebsring verbunden ist, der aus einem magnetischen Material hergestellt ist und sich im Wesentlichen koaxial mit dem rohrförmigen Körper erstreckt.

Die Druckschrift DE 197 16 980 A1 zeigt ein automatisches Sperrventil, wobei das Sperrventil zwei Rückflussverhinderer aufweist, welche gegeneinander gerichtet sind, sodass im geschalteten Zustand beide Strömungsrichtungen gesperrt bleiben.

Des Weiteren zeigt die Druckschrift WO 92/08919 A1 ein Ventil, insbesondere für hohe Reinheits- und/oder Sicherheitsanforderungen, mit einem Ventilgehäuse, dessen Innenraum ein Führungs- und Betätigungsglied umschließt.

Des Weiteren zeigt die Druckschrift DE 90 15 711 U1 ein Ventil, insbesondere für hohe Reinheits- und/oder Sicherheitsanforderungen, mit einem Ventilgehäuse, dessen Innenraum, durch den ein Flüssiges oder Gasförmiges Medium hindurchleitbar ist, ein Einlasskanal und ein Auslasskanal aufweist.

Des Weiteren zeigt die Druckschrift JP 2001-012644 A ein Magnetventil, das dazu vorgesehen ist, den Öffnungs- und Schließvorgang des Ventilkörpers unter Verwendung des Magnetismus eines Magneten auszuführen.

Des Weiteren zeigt die Druckschrift EP 1 985 900 A2 Ventile zur Steuerung des Fluiddurchflusses und insbesondere ein koaxiales Ventil, das dazu vorgesehen ist, um chemisch aggressive Fluide für den pharmazeutischen oder medizinischen Sektor und ebenfalls zur Anwendung in der Nahrungsindustrie abzugeben.

Aus dem Stand der Technik ist bekannt, einen Stempel vorzusehen, der eine Austrittsöffnung der Füllnadel verschließt bzw. freigibt, um die abzufüllenden Flüssigkeitsmengen genau zu dosieren. Da das Stempelelement unmittelbar am Austrittsende angeordnet ist, kann so ein Nachlaufen bzw. Nachtropfen von Flüssigkeitsmengen vermieden werden. In Füllnadeln ist jedoch gleichzeitig am Austrittsende nur ein geringer Bauraum vorhanden, so dass Betätigungselemente zum Bewegen des Stempelelements entfernt von der Austrittsöffnung vorzusehen sind. Im Stand der Technik sind dies Aktuatoren, die über ein sich im Inneren der Füllnadel parallel zu deren Längsachse erstreckendes Stabelement mit dem Stempel gekoppelt sind. Die Aktuatoren sind über Dichtungspakete gegenüber dem Fluidraum abgedichtet. Dennoch sind die Füllnadeln in bestimmten Intervallen zu reinigen, um gegebenenfalls vorhandene Anforderungen an Reinraumbedingungen usw. sicher einhalten zu können. Hierzu sind die Befüllungsanlagen anzuhalten und sämtliche Füllnadeln auszubauen und zu reinigen. Entsprechend geht mit dem Reinigen der Füllnadeln aufgrund des Stillstehens der gesamten Anlage ein relativ hoher Kostenaufwand einher.

Beispielsweise aus den Druckschriften DE 10 2010 030 175 A1 und DE 10 2012 206 262 A1 sind Düsennadeln zum Einspritzen von Kraftstoff bekannt, bei denen eine Magnetankeranordnung mittels einer wahlweise bestromten Spule bewegt wird. Dies erfordert jedoch eine Versorgung einer derartigen Düsennadel mit elektrischem Strom und erfordert gegebenenfalls mechanisch aufwändigere Anordnungen mit Federpaketen, die die Düsennadel in einen geschlossenen Zustand vorspannt, um einen sicheren Betrieb zu gewährleisten.

Es besteht daher ein Bedarf an einer verbesserten Füllnadel zum Befüllen eines Behälters, die einen geringeren Reinigungs- und Wartungsaufwand erfordert und dabei einen konstruktiv einfachen Aufbau beibehält.

Gemäß einer Ausführungsform der vorliegenden Erfindung wird daher eine Füllnadel zum Befüllen eines Behälters mit einem Fluid, insbesondere einem pharmazeutischen oder kosmetischen Fluid, mit einem Gehäuse, wobei sich das Gehäuse entlang einer Längsachse erstreckt und eine Eintrittsöffnung und eine Austrittsöffnung aufweist, einem Kernelement, das innerhalb des Gehäuses parallel zu der Längsachse zwischen einer Öffnungsposition und einer Verschlussposition verschiebbar angeordnet ist, einem Stempelelement, das mit dem Kernelement gekoppelt ist, wobei das Stempelelement die Austrittsöffnung in der Verschlussposition verschließt und in der Öffnungsposition freigibt, und einer Betätigungsanordnung zum Verschieben des Kernelements zwischen der Öffnungsposition und der Verschlussposition, wobei das Kernelement mindestens einen als Permanentmagnet ausgebildeten Kernmagneten aufweist, wobei die Betätigungsanordnung außerhalb des Gehäuses angeordnet ist und mindestens einen als Permanentmagnet ausgebildeten Betätigungsmagneten aufweist, und wobei der mindestens eine Kernmagnet und der mindestens eine Betätigungsmagnet derart angeordnet sind, dass sie anziehend zusammenwirken und das Kernelement und die Betätigungsanordnung gemeinsam parallel zu der Längsachse verschiebbar sind, wobei das Kernelement eine Innenaussparung aufweist, um eine Fluidverbindung zwischen der Eintrittsöffnung und der Austrittsöffnung in der Öffnungsposition bereitzustellen, wobei der mindestens eine Kernmagnet ringförmig ausgebildet ist und die Innenaussparung umschließt, wobei das Kernelement ein Innenelement und ein Außenelement aufweist, wobei das Innenelement und das Außenelement im Wesentlichen rotationssymmetrisch und hülsenförmig ausgebildet sind, wobei das Innenelement mit dem Außenelement verpresst ist, wobei das Innenelement und das Außenelement zwischen sich einen Zwischenraum ausbilden, wobei der mindestens eine Kernmagnet in dem Zwischenraum angeordnet ist, wobei das Innenelement und das Außenelement jeweils hülsenförmig und rotationssymmetrisch ausgebildet sind, wobei das Innenelement und das Außenelement jeweils in einer die Längsachse aufweisenden Querschnittsebene im Wesentlichen Z-förmig ausgebildet sind, und wobei des Weiteren ein oberes Abschlusselement, das mit dem Außenelement verpresst ist, und ein unteres Abschlusselement, das mit dem Innenelement verpresst ist, vorgesehen sind, wobei zum Abdichten der Innenaussparung und damit des Bereichs, in dem das Fluid geführt wird, Dichtungsringe angeordnet sind, um die Pressflächen abzudichten.

Auf diese Weise wird es möglich, das Kernelement zu betätigen und parallel zu der Längsachse des Gehäuses zu verschieben, ohne dass ein Durchbruch durch das Gehäuse und damit ein Eingriff in den darin befindlichen Reinraum notwendig ist. Auf diese Weise wird die Möglichkeit einer Verunreinigung des Reinraums durch die Betätigungsanordnung sicher vermieden. Dichtungspakete, die die Betätigungsanordnung gegenüber dem Reinraum abdichten, sind nicht mehr vorzusehen. Daher kann es zu keiner Verunreinigung des Fluids bzw. des Reinraums innerhalb des Gehäuses kommen. Der mindestens eine Betätigungsmagnet und der mindestens eine Kernmagnet sind derart angeordnet, dass sie anziehend zusammen wirken. Dies bedeutet, dass eine magnetische Kopplung des Kernelements mit der Betätigungsanordnung bereitgestellt ist. Die Feldlinien des durch den Betätigungsmagnet und den Kernmagnet gebildeten magnetischen Feldes wirken durch das Gehäuse hindurch. Ein Verschieben der Betätigungsanordnung parallel zu der Längsachse entlang des Gehäuses führt aufgrund der magnetischen Kupplung zwangsweise dazu, dass sich das Kernelement in gleichem Maß parallel zu der Längsachse bewegt. Auf diese Weise kann ohne Durchbrechungen des Gehäuses eine Aktuierung des Kernelements und des mit diesem gekoppelten, insbesondere verbundenen, Stempelelements erfolgen. Das Kernelement ist mit dem Stempelelement gekoppelt, insbesondere verbunden. Dies bedeutet, dass eine Betätigung des Kernelements zwischen der Öffnungsposition und der Verschlussposition ebenfalls eine Betätigung des Stempelelements zwischen einer Öffnungsposition und einer Verschlussposition bewirkt. Insbesondere wenn das Stempelelement mit dem Kernelement verbunden ist, ist das Stempelelement gemeinsam mit dem Kernelement parallel zu der Längsachse des Gehäuses verschiebbar.

Die Lage der Längsachse ergibt sich stets in offensichtlicher Weise aus der Geometrie der Füllnadel. Die Füllnadel weist stets anschließend an die Austrittsöffnung einen langgestreckten Abschnitt auf, mit dem die Füllnadel in zu befüllende Behälter eingeführt wird. Entsprechend parallel zu dieser Längserstreckung verläuft die Längsachse der Füllnadel.

Des Weiteren ist es möglich, die Betätigungsanordnung in aus dem Stand der Technik bekannter Weise, beispielsweise über pneumatische Antriebseinrichtungen zu betätigen. Da die Kopplung über Permanentmagnete erfolgt, ist keine zusätzliche Bestromung etwaiger Spulen bzw. eine elektrische Energieversorgung notwendig. Dies ermöglicht die unveränderte Beibehaltung des die Füllnadel umgebenden Maschinenkonzepts einer Befüllungsanlage. Insbesondere ermöglicht dies auch den Ersatz bestehender Füllnadeln durch die im Rahmen dieser Anmeldung vorgeschlagenen verbesserten Füllnadeln ohne die Notwendigkeit einer Umkonstruktion der Befüllungsanlage.

Dies ermöglicht eine Führung des Kernelements mit seinem Außenumfang an einem Innenumfang des Gehäuses. Das Fluid tritt dann durch die Innenaussparung durch das Kernelement in Längsrichtung hindurch. Gleichzeitig ermöglicht dieses die Anordnung der Kernmagnete in einem Mantel des im Wesentlichen hülsenförmig ausgestalteten Kernelements.

Auf diese Weise wird der mindestens eine Kernmagnet ebenfalls ringförmig bereitgestellt, wodurch sich, insbesondere im Zusammenwirken mit der Ausrichtung der Polachsen parallel zu der Längsachse, ein besonders starkes Zusammenwirken zwischen dem mindestens einen Kernmagneten und dem mindestens einen Betätigungsmagneten ergibt.

Auf diese Weise wird es ermöglicht, das Kernelement durch Verpressen des Innenelements mit dem Außenelement bereitzustellen. In dem dazwischen gebildeten Zwischenraum werden dann der mindestens eine Kernmagnet eingepresst und gehalten. Dies kann ein Fertigen des Kernelements ohne Schweißvorgänge oder andere hitzebeaufschlagende Vorgänge ermöglichen, die eventuell die magnetischen Eigenschaften des mindestens einen Kernmagnets beeinträchtigen.

Des Weiteren wird eine Füllanlage mit mindestens einer Füllnadel gemäß der voranstehend genannten Ausführungsform oder ein ihrer Ausgestaltungen bereitgestellt. Eine solche Füllanlage kann somit schneller und kosteneffektiver gewartet werden und stellt im Wesentlichen dieselben Vorteile bereit.

Die eingangs gestellte Aufgabe wird somit vollkommen gelöst.

In einer Ausgestaltung der Füllnadel kann vorgesehen sein, dass die Betätigungsanordnung hülsenförmig ausgebildet ist, wobei die hülsenförmige Betätigungsanordnung einen Axialabschnitt des Gehäuses umgibt.

Durch die hülsenförmige Ausgestaltung der Betätigungsanordnung kann eine sichere Führung auf dem Gehäuse bereitgestellt werden. Gleichzeitig ermöglicht es die unmittelbare Anordnung der Betätigungsmagnete an dem Gehäuse, um Wirkungsverluste aufgrund eines Luftspalts zu minimieren.

In einer weiteren Ausgestaltung der Füllnadel kann vorgesehen sein, dass der mindestens eine Betätigungsmagnet ringförmig ausgebildet ist und das Gehäuse umschließt.

Auf diese Weise kann eine symmetrische Ausgestaltung der Magnetfelder und eine hohe Magnetkraft bereitgestellt werden, die die Betätigungsanordnung und das Kernelement sicher koppelt.

In einer weiteren Ausgestaltung der Füllnadel kann vorgesehen sein, dass das Kernelement mehrere Kernmagnete aufweist, wobei die Betätigungsanordnung mehrere Betätigungsmagnete aufweist, und wobei eine Anzahl der Betätigungsmagnete und eine Anzahl der Kernmagnete identisch sind.

Auf diese Weise kann es möglich sein, das das Kernelement und die Betätigungsanordnung koppelnde Magnetfeld über einen längeren Bereich des Axialabschnitts zu koppeln. Sowohl das Kernelement als auch die Betätigungsanordnung können sich über einen längeren Axialabschnitt erstrecken. Um entsprechend auch das koppelnde Magnetfeld über dieses Axialabschnitt zu erstrecken, kann folglich eine Mehrzahl von Kernmagneten und eine Mehrzahl von Betätigungsmagneten bereitgestellt sein. Die identische Anzahl bewirkt folglich, dass jeweils ein Kernmagnet einem bestimmten Betätigungsmagnet zugeordnet ist.

In einer weiteren Ausgestaltung der Füllnadel kann vorgesehen sein, dass das Kernelement eine Mehrzahl von Kernringelementen aufweist, wobei jedes Kernringelement aus mindestens einem paramagnetischen und/oder ferromagnetischen Material ausgebildet ist, und wobei die Mehrzahl von Kernringelementen und der mindestens eine Kernmagnet in axialer Richtung abwechselnd angeordnet sind, und dass die Betätigungsanordnung eine Mehrzahl von Betätigungsringelementen aufweist, wobei jedes Betätigungsringelement aus mindestens einem paramagnetischen und/oder ferromagnetischen Magnet ausgebildet ist, und wobei die Mehrzahl von Betätigungsringelementen und der mindestens eine Betätigungsmagnet in axialer Richtung abwechselnd angeordnet sind.

Insbesondere kann es sich bei dem Material für den mindestens einen Kernmagneten und/oder den mindestens einen Betätigungsmagneten um Eisen oder ein Ferrit wie beispielsweise Eisenoxid oder ein anderes Metalloxid handeln. Vorzugsweise handelt es sich jedoch um einen ferromagnetischen Werkstoff.

Auf diese Weise können die Magnetfelder des mindestens einen Kernmagneten des mindestens einen Betätigungsmagneten stark verstärkt werden. In der Praxis hat sich gezeigt, dass über einen abwechselnden Aufbau von Magneten und ferromagnetischem Ringelementen eine besonders gute magnetische Kopplung von Betätigungsanordnung und Kernelement bereitgestellt werden kann.

Üblicherweise werden Werkstoffe mit einer magnetischen Permeabilität von größer 1 als paramagnetisch bezeichnet. Als ferromagnetische Werkstoffe werden solche Werkstoffe klassifiziert, deren magnetische Permeabilität sehr viel größer 1 ist, da sich die magnetischen Momente des Ferromagneten parallel zu einem äußeren Magnetfeld ausrichten und dieses stark verstärken. Grundsätzlich weisen auch ferrimagnetische und antiferromagnetische Stoffe eine magnetische Ordnung auf und können statt eines ferromagnetischen Werkstoffs verwendet werden, insbesondere viele Oxide von ferromagnetischen Elementen wie Eisen, Nickel und Kobalt. Bevorzugt werden jedoch ferromagnetische Werkstoffe verwendet.

In einer weiteren Ausgestaltung der Füllnadel kann vorgesehen sein, dass das Kernelement eine gerade Anzahl von Kernmagneten und eine ungerade Anzahl von Kernringelementen aufweist, und dass die Betätigungsanordnung eine gerade Anzahl von Betätigungsmagneten und eine ungerade Anzahl von Betätigungsringelementen aufweist.

Auf diese Weise sind die Kernringelemente bzw. Betätigungsringelemente "außen" bzw. an den Enden der abwechselnden Folge von Ringelementen und Magneten angeordnet. Auf diese Weise kann das Magnetfeld der Magnete besonders geeignet verstärkt werden und der axiale Bauraum effektiv genutzt werden.

Insbesondere kann in einer Ausgestaltung vorgesehen sein, dass das Kernelement zwei Kernmagnete und drei Kernringelemente aufweist, so dass die Betätigungsanordnung zwei Betätigungsmagnete und drei Betätigungsringelemente aufweist.

Es hat sich herausgestellt, dass mit dieser Anordnung die Magnetfelder der zwei Kernmagnete bzw. zwei Betätigungsmagnete bei effektiver Nutzung des axialen Bauraums ausreichend verstärkt werden können und eine sichere Kopplung von Kernelement und Betätigungsanordnung bereitgestellt ist.

In einer weiteren Ausgestaltung der Füllnadel kann vorgesehen sein, dass eine Polachse des mindestens einen Kernmagneten und eine Polachse des mindestens einen Betätigungsmagneten parallel zu der Längsachse des Gehäuses angeordnet ist, wobei die Polachse des mindestens einen Kernmagneten und die Polachse des mindestens einen Betätigungsmagneten gegensinnig gepolt sind.

Insbesondere durch die ringförmige Ausgestaltung des mindestens einen Betätigungsmagneten wird eine effektive Bereitstellung eines starken Magnetfeldes ermöglicht, wenn die Polachsen nicht senkrecht zu der Längsachse, sondern parallel zu der Längsachse der Füllnadel ausgerichtet sind. Gleiches kann entsprechend für den mindestens einen Kernmagneten gelten. Durch die gegensinnige Polung jeweils eines Betätigungsmagneten und eines zugeordneten Kernmagneten werden die zur magnetischen Kopplung notwendigen Anziehungskräfte bereitgestellt.

Insbesondere, wenn sowohl der mindestens eine Kernmagnet als auch der mindestens eine Betätigungsmagnet ringförmig ausgebildet und koaxial zueinander angeordnet sind, fallen die Achsen der stärksten magnetischen Wirkungen mit der Längsachse zusammen. Die Längsachse fällt dann mit den Rotationssymmetrieachsen des mindestens einen Kernmagneten und des mindestens einen Betätigungsmagneten zusammen. Folglich wird eine besonders starke Kopplung über die Magnetfelder des mindestens einen Betätigungsmagneten und des mindestens einen Kernmagneten bereitgestellt.

In einer weiteren Ausgestaltung der Füllnadel kann vorgesehen sein, dass die Betätigungsanordnung einen ersten Betätigungsmagneten und einen zweiten Betätigungsmagneten aufweist, wobei die Polachsen der Betätigungsmagneten parallel zu der Längsachse verlaufen, und wobei der erste Betätigungsmagnet und der zweite Betätigungsmagnet gegensinnig gepolt sind, wobei das Kernelement einen ersten Kernmagneten aufweist, der dem ersten Betätigungsmagneten zugeordnet ist und gegensinnig zu diesem gepolt ist, und wobei das Kernelement einen zweiten Kernmagneten aufweist, der dem zweiten Betätigungsmagneten zugeordnet ist und gegensinnig zu diesem gepolt ist.

Auf diese Weise kann insgesamt eine magnetisch anziehende Anordnung bereitgestellt werden, in der wiederum der erste Betätigungsmagnet und der erste Kernmagnet sowie der zweite Betätigungsmagnet und der zweite Kernmagnet gemeinsam ein Magnetfeld nach Art eines Quadrupols bilden. Auf diese Weise kann eine besonders wirksame Kopplung zwischen Kernelement und Betätigungselement bereitgestellt werden, insbesondere, da die Magnetfeldlinien zwischen erstem Kernmagneten und zweitem Kernmagneten bzw. erstem Betätigungsmagneten und zweitem Betätigungsmagneten nahezu senkrecht zu der Längsachse durch das Gehäuse hindurch verlaufen.

In einer Ausgestaltung der Füllnadel kann vorgesehen sein, dass das Stempelelement ein die Austrittsöffnung innenseitig verschließendes oder ein die Austrittsöffnung außenseitig verschließendes Stempelelement ist.

Grundsätzlich kann somit das Stempelelement als innenseitig oder außenseitig verschließendes Stempelelement bereitgestellt sein. Abhängig von dieser Ausgestaltung ändern sich lediglich die Öffnungsposition und die Verschlussposition. Während bei dem innenseitig verschließenden Stempelelement eine der Austrittsöffnung nahe Position des Kernelements die Verschlussposition bildet und eine weiter von der Austrittsöffnung entfernte Position des Kernelements eine Öffnungsposition bildet, verhält sich dies bei einem außenseitig verschließenden Stempelelement gerade umgekehrt.

In der Ausgestaltung der Füllnadel kann vorgesehen sein, dass die Betätigungsanordnung pneumatisch, hydraulisch oder elektrisch angetrieben ist. Vorzugsweise ist vorgesehen, dass die Betätigungsanordnung pneumatisch angetrieben ist, da in der Regel zum Betreiben einer Befüllungsanlage, insbesondere zum Bewegen der gesamten Füllnadel in und aus einem Behälter ohnehin eine Pneumatik bereitgestellt ist und somit eine Druckluftquelle vorhanden ist. Grundsätzlich können natürlich auch andere Antriebsarten bereitgestellt sein.

In einer weiteren Ausgestaltung kann vorgesehen sein, dass die Betätigungsanordnung über eine Hebeleinrichtung angetrieben ist.

Es kann somit vorgesehen sein, dass beispielsweise ein Aktuator direkt an die Betätigungsanordnung angelenkt ist oder aber über eine Hebeleinrichtung an die Betätigungsanordnung angelenkt ist. Abhängig von den aufzubringenden Kräften und den zur Verfügung stehenden Verfahrwegen kann die auf die Betätigungsanordnung zu deren Verschieben beaufschlagte Kraft geeignet über die Hebeleinrichtung eingestellt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine isometrische Ansicht einer Ausführungsform einer Füllnadel,
- Fig. 2: eine Seitenansicht der Füllnadel in Fig. 1,
- Fig. 3: eine Detaildarstellung einer Ausführungsform eines Kernelements,
- Fig. 4: eine Querschnittsansicht entlang einer Linie IV-IV in Fig. 2, und
- Fig. 5: ein Beispiel für eine Anordnung von Kernmagneten und Betätigungsmagneten sowie ihrer entsprechenden Polung.

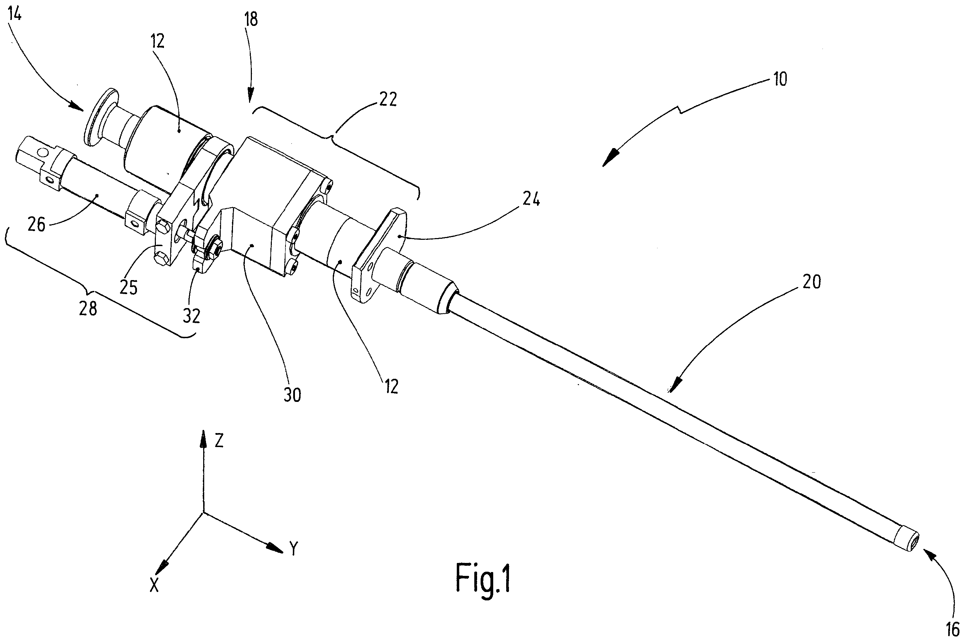

Fig. 1 zeigt eine Ausführungsform einer Füllnadel 10. Die Füllnadel 10 weist ein Gehäuse 12 auf. Das Gehäuse 12 erstreckt sich zwischen einer Eintrittsöffnung 14 und einer Austrittsöffnung 16. Das Gehäuse 12 weist nahe der Eintrittsöffnung einen ersten Gehäusebereich 18 auf. Dieser erste Gehäusebereich 18 wird auch als Füllrohr bezeichnet. Des Weiteren weist das Gehäuse 12 einen zweiten Gehäusebereich 20 auf. Der zweite Gehäusebereich 20 kann auch als Nadelgehäuse bezeichnet werden.

In der dargestellten Ausführungsform sind der erste Gehäusebereich 18 und der zweite Gehäusebereich 20 aus einem Stück gefertigt. Grundsätzlich kann das Gehäuse 12 jedoch beispielsweise auch aus zwei Teilen, insbesondere dem ersten Gehäusebereich 18 und dem zweiten Gehäusebereich 20 in separater Ausbildung gefertigt sein. Der erste Gehäusebereich 18 weist einen Axialabschnitt 22 auf. Dieser Axialabschnitt 22 des ersten Gehäusebereichs 18 dient als Führung für eine Betätigungsanordnung 30 an seiner Außenfläche. An seiner Innenfläche dient er als Führung für ein im Nachfolgenden noch detailliert beschriebenes Kernelement.

Darüber hinaus ist an dem Gehäuse 12 ein Befestigungsflansch 24 angeordnet, über diesen Befestigungsflansch 24 kann die Füllnadel 10 beispielsweise an eine Befüllungsanlage montiert werden.

Die Füllnadel 10 weist in der dargestellten Ausführungsform einen Pneumatikzylinder 26 auf. Dieser ist Teil einer Antriebseinrichtung 28, die die Betätigungsanordnung 30 parallel zu einer Längserstreckung der Füllnadel (in der Fig. 1 die Y-Richtung) verschieben kann. Grundsätzlich sind jedoch auch andere Antriebseinrichtungen möglich, beispielsweise eine hydraulische Antriebseinrichtung oder eine elektrische Antriebseinrichtung, die in gewünschter Weise eine translatorische Bewegung der Betätigungsanordnung 30 ermöglichen. Zur Führung eines Betätigungszylinders des Pneumatikzylinders 26 ist ein Führungsflansch 25 vorgesehen, der die Bewegung des Pneumatikzylinders 26 in der X-Z-Ebene stützt. Durch Aktivierung des Pneumatikzylinders 26 kann so die Betätigungsanordnung 30 verschoben werden. Der Pneumatikzylinder 26 greift mit einem an der Betätigungsanordnung 30 vorgesehenen Mitnahmeflansch 32 ineinander. Auf diese Weise sind der Pneumatikzylinder 26 und die Betätigungsanordnung 30 in Y-Richtung miteinander gekoppelt. Eine Betätigung des Pneumatikzylinders 26 kann dann die Betätigungsanordnung parallel zu der Y-Richtung versetzen. Die Betätigungsanordnung weist vorzugsweise ein Aluminiumgehäuse auf. Vorzugsweise ist die Betätigungsanordnung 30 über zwei Kunststoff-Gleitbuchsen an einer Außenfläche des Axialabschnitts 22 geführt.

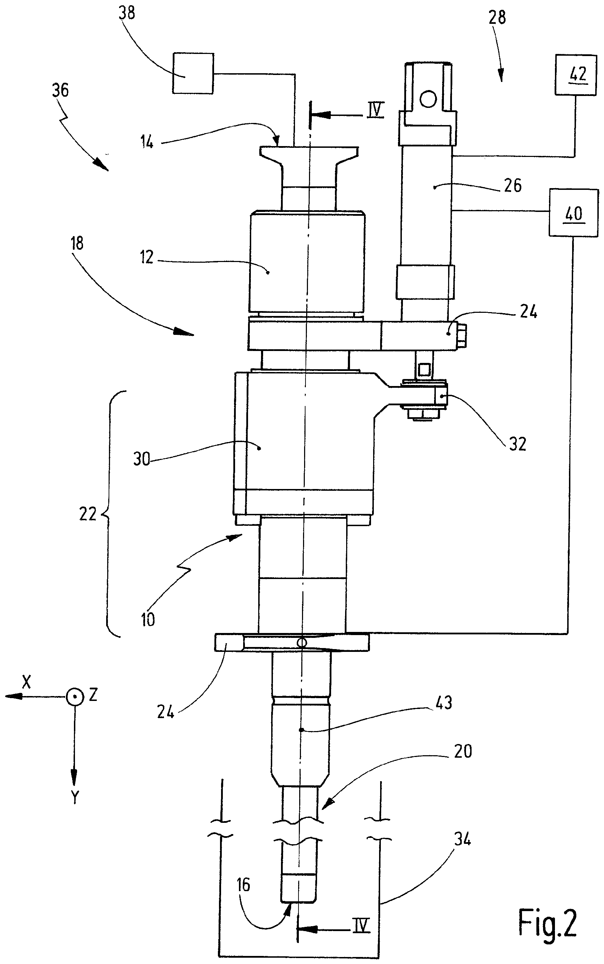

Die Fig. 2 zeigt eine Seitenansicht der Füllnadel 10 im Zusammenhang mit der äußeren Umgebung einer Füllanlage 36. Die Füllnadel 10 dient zum Füllen eines Fluids in einem schematisch dargestellten Behälter 34. Hierfür kann vorgesehen sein, dass die Füllnadel 10 parallel zu der Y-Richtung in den Behälter 34 einführbar bzw. aus diesem herausführbar ist. Dies muss jedoch nicht zwingend der Fall sein. Das Fluid wird aus einem Reservoir 38 der Eintrittsöffnung 14 der Füllnadel 10 zugeführt. Dies geschieht in an sich üblicher Weise. Zur Ansteuerung der Füllnadel 10, insbesondere einer Bewegung der gesamten Füllnadel 10 parallel zu der Y-Richtung und einer Aktuierung des Pneumatikzylinders 26 dient eine Regelungseinrichtung 40 der Füllanlage 36. Jetzt kann beispielsweise eine Druckluftquelle 42 der Füllanlage bereitgestellt sein, um die Antriebseinrichtung 28 bereitzustellen und den Pneumatikzylinder 26 gesteuert durch die Regelungseinrichtung 40 zu betätigen.

Alle übrigen Elemente sind mit gleichen Bezugszeichen gekennzeichnet und werden daher nicht erneut erläutert.

In der Fig. 2 ebenfalls dargestellt ist eine Längsachse 43 der Füllnadel 10, die entlang der Längserstreckung des Gehäuses 12 verläuft. In der dargestellten Ausführungsform erstreckt sich die Längsachse 43 von der Eintrittsöffnung 14 bis zu der Austrittsöffnung 16. Im Inneren ist das Gehäuse 12 hohl ausgebildet, so dass ein Fluid von der Eintrittsöffnung 14 zu der Austrittsöffnung 16 durch das Gehäuse 12 hindurchtreten kann.

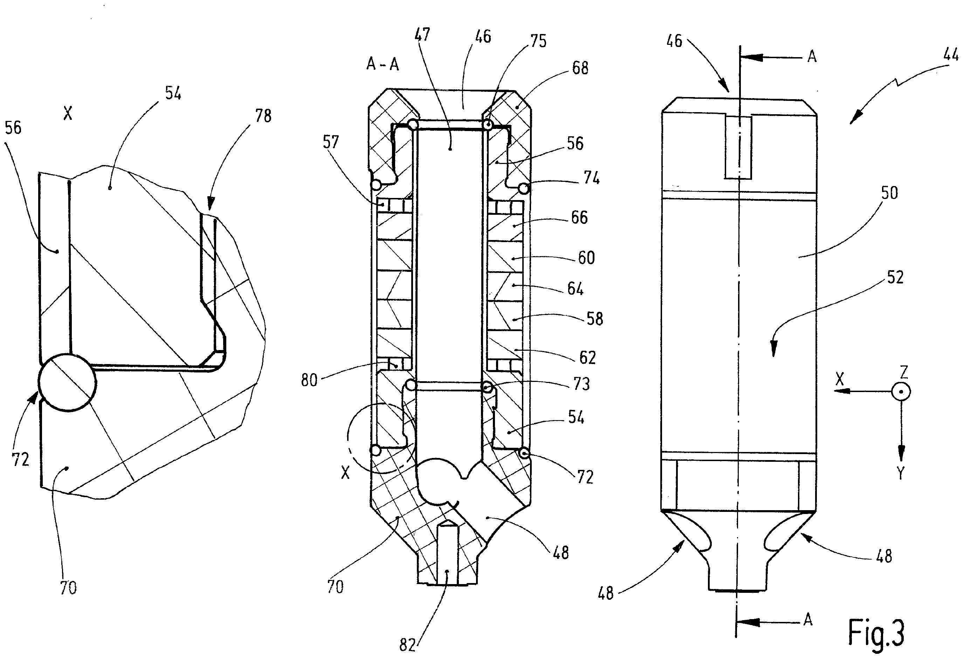

Die Fig. 3 zeigt ein Kernelement 44. Das Kernelement 44 ist im Inneren des Gehäuses 12, insbesondere innerhalb des ersten Gehäusebereichs 18, angeordnet. Das Kernelement 44 ist parallel zu der Längsachse 43 in dem Gehäuse 12 verschiebbar, d.h. parallel zu der Y-Richtung. Das Kernelement 44 weist einen Eintrittsabschnitt 46 auf, in den durch die Eintrittsöffnung 14 in das Gehäuse 12 eingetretenes Fluid in das Kernelement 44 eintritt. Des Weiteren weist es zumindest einen Austrittsabschnitt 48 auf, durch den das Fluid das Kernelement 44 wieder in Richtung der Austrittsöffnung 16 verlässt. In der dargestellten Ausführungsform weist das Kernelement 44 drei Austrittsabschnitte 48 auf, von denen in der dargestellten Ansicht zwei erkennbar sind. Die Austrittsabschnitte 48 sind jeweils um 120° versetzt angeordnet.

Wie die Querschnittsansicht A-A der Fig. 3 zu entnehmen ist, werden der Eintrittsabschnitt 46 und der mindestens eine Austrittsabschnitt 48 durch eine Innenaussparung 47 miteinander verbunden. Das Kernelement 44 weist somit im Wesentlichen die Form einer Hülse auf, die die Innenaussparung 47 umgibt. Die Hülse ist mit dem Bezugszeichen 50 gekennzeichnet. Mittels einer Außenseite der Hülse 52 kann das Kernelement 44 verschiebbar in dem Gehäuse 12 geführt sein.

Das Kernelement 44 weist ein Innenelement 54 und ein Außenelement 56 auf. Jedes der Elemente ist im Wesentlichen Z-förmig in dem Querschnitt der Fig. 8-8 ausgebildet. Das Innenelement 54 und das Außenelement 56 sind im Wesentlichen rotationssymmetrisch und hülsenförmig ausgebildet. Zwischen sich bilden sie einen Zwischenraum 57 aus. In diesem Zwischenraum 57 können ein erster Kernmagnet 58 und zweiter Kernmagnet 60 angeordnet sein. In der dargestellten Ausführungsform sind darüber hinaus insgesamt drei Kernringelemente 62, 64, 66 in Y-Richtung, d.h. parallel zu der Längsachse 43 abwechselnd mit dem ersten Kernmagnet 58 und dem zweiten Kernmagnet 60 angeordnet. Darüber hinaus können Distanzringe oder Distanzstücke 80 vorgesehen sein, um die Kernmagnete 58, 60 und die Kernringelemente 62, 64, 66 in dem Zwischenraum 57 abzustützen. Diese können gegebenenfalls elastisch ausgebildet sein, um die Kernmagneten 58, 60 und die Kernringelemente 62, 64, 66 während eines Verpressens des Innenelements 54 und des Außenelements 56 geeignet abzustützen. Durch das Fertigen des Verpressens ist es möglich, das Kernelement 44 geeignet zu fertigen, ohne aufgrund zu hoher Temperaturen die Kernmagnete 58, 60 zu beeinträchtigen. Die Kernringelemente 62, 64, 66 sind vorzugsweise aus Eisen oder einem anderen ferromagnetischen Material ausgebildet. Jeder der Kernmagnete 58, 60 und der Kernringelemente 62, 64, 66 sind ringförmig ausgebildet und umschließen die Innenaussparung 47. Des Weiteren sind ein oberes Abschlusselement 68 und eine unteres Abschlusselement 70 vorgesehen. Das obere Abschlusselement 68 ist mit dem Außenelement 56 verpresst. Das unsere Abschlusselement 70 ist mit dem Innenelement 54 verpresst. Zum, insbesondere pharmazeutischen, Abdichten der Innenaussparung 47 und damit des Bereichs, in den das Fluid geführt wird, sind Dichtungsringe 72, 73, 74, 75 angeordnet, um die Pressflächen geeignet abzudichten. In der Vergrößerung X ist eine entsprechend Passung 78 zum Verpressen beispielsweise des unteren Abschlusselement 70 mit dem Innenelement 54 angedeutet. Die dargestellte Anordnung hat den Vorteil, dass beispielsweise mittels des Dichtungsrings 72 sowohl eine Fläche zwischen dem Innenelement 54 und dem Außenelement 56 als auch zwischen dem Element 54 und dem unteren Abschlusselement 70 abgedichtet werden kann.

Des Weiteren weist das Kernelement 44, insbesondere in dem unteren Abschlusselement 70, eine Stempelaufnahme 82 auf, über die es mit dem Stempelelement (in der Fig. 3 nicht dargestellt) verbunden werden kann. In der dargestellten Ausführungsform ist die Stempelaufnahme 82 eine Gewindeaufnahme, in die das Stempelelement eingeschraubt werden kann.

Es können an dem Kernelement auch 44 Gleitbuchsen vorgesehen sein, um das Kernelement zu führen. Alternativ kann auch eine Gleitbeschichtung aufgebracht werden, um das Kernelement 44 für die Außenseite der Hülse 52 zu führen. Dabei sollten jedoch die Kernmagnete 58, 60 nicht über 200 °C erhitzt werden, um diese in ihren magnetischen Eigenschaften nicht zu beeinträchtigen. Insbesondere können das obere Abschlusselement 68 und das untere Abschlusselement 70 als Gleitbuchsen ausgebildet sein. Insbesondere können das obere Abschlusselement 68 und das untere Abschlusselement aus Polyetheretherketon (PEEK) ausgebildet sein.

Aus diesem Material können auch das Außenelement 56 und das Innenelement 54 ausgebildet sein. Dieses Material bildet insbesondere Vorteile hinsichtlich seiner chemischen Beständigkeit.

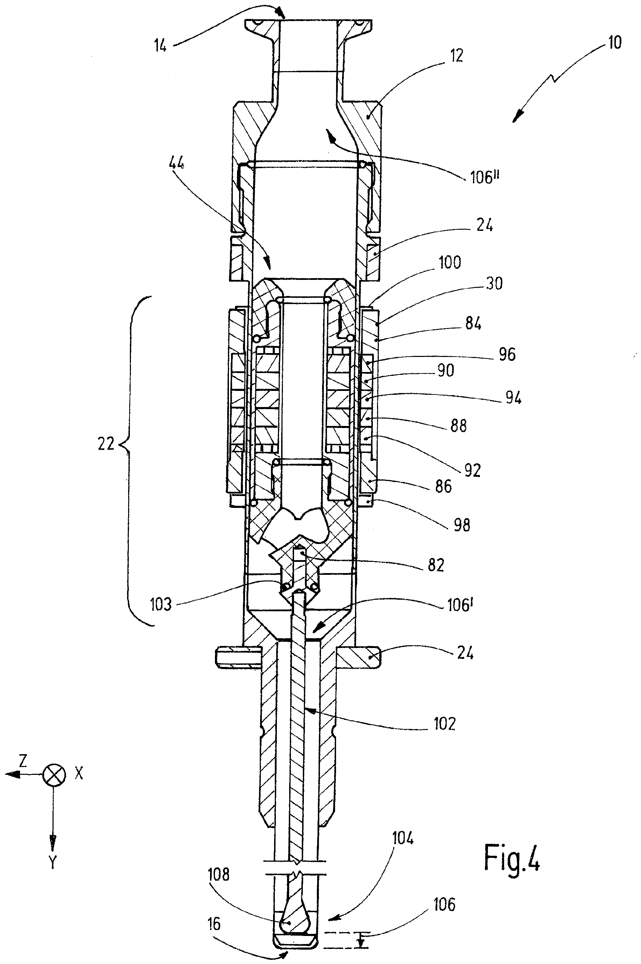

Die Fig. 4 zeigt eine Querschnittsansicht entlang einer Linie IV-IV in der Fig. 2. Das Kernelement 44 ist wie in der Fig. 3 dargestellt ausgeführt und in dem Axialabschnitt 22 des Gehäuses 12 geführt.

Betätigungsanordnung 30 weist ein erstes Element 84 und ein zweites Element 86 auf. Das erste Element 84 hat im Wesentlichen eine Funktionsweise wie das Außenelement 56 des Kernelement 44. Das Innenelement 86 hat im Wesentlichen eine Funktionsweise wie das Innenelement 54 des Kernelements 44. Sie können miteinander verpresst werden und zwischen sich einen ersten Betätigungsmagneten 88 und einen zweiten Betätigungsmagneten 90 in der dargestellten Ausführungsform aufnehmen. Des Weiteren sind in der dargestellten Ausführungsform drei Betätigungsringelemente 92, 94, 96 vorgesehen. Die Betätigungsringelemente 92, 94, 96 sind vorzugsweise aus Eisen oder einem anderen ferromagnetischen Werkstoff ausgebildet. Des Weiteren sind zwei Gleitbuchsen 98 und 100 vorgesehen, die die Betätigungsanordnung 30 an dem Gehäuse 12 führen.

Ein Stempelelement ist mit 102 bezeichnet und in die Stempelaufnahme 82 des Kernelements 44 eingeschraubt. Das Kernelement 54 ist an dem Stempelelement 102 mittels einer Dichtung 103 abgedichtet.

In der Fig. 4 ist das Kernelement 44 und folglich das Stempelelement 102 in einer Öffnungsposition 104 dargestellt. Ein Stempelkopf 108 des Stempelelements 102 verschließt in dieser Stellung die Austrittsöffnung 16 nicht. Wird nun die Betätigungsanordnung 30 mittels der Antriebseinrichtung 28 in positive Y-Richtung, d.h. in der Fig. 4 nach unten, bewegt, wird das Kernelement aufgrund der magnetischen Kopplung zwischen dem Kernelement 44 und der Betätigungsanordnung 30 in positive Y-Richtung mitgenommen. Folglich bewegt sich auch das Stempelelement 102 in positive Y-Richtung, so dass der Stempelkopf 108 die Austrittsöffnung 16 verschließt und sich die Anordnung dann in einer Verschlussposition 106 befindet. In der Fig. 4 ist das Stempelelement 102 als ein innenseitig verschließendes Stempelelement dargestellt. Selbstverständlich sind auch außenseitig verschließende Stempelelemente denkbar. Es ergibt sich dann, dass eine Verschlussposition oberhalb, d.h. weiter in negativer Y-Richtung, relativ zu der Öffnungsposition liegt, da ein Stempelkopf dann quasi an die Austrittsöffnung 16 herangezogen werden muss, um diese zu verschließen. Des Weiteren muss die Verschlussposition 106 nicht zwingend an der Austrittsöffnung 16 der Füllnadel 10 angeordnet sein. Grundsätzlich sind auch andere Anordnungen des Stempelelements 102 zwischen dem Reservoir 38 und der Austrittsöffnung 16 möglich, um aufgrund der Kopplung des Stempelelements 102 mit dem Kernelement 44 ein Ausströmen des Fluids wahlweise zu sperren bzw. freizugeben. In der Fig. 4 ist eine weitere beispielhafte Anordnung einer Verschlussposition 106' an dem Gehäuse 12 bezeichnet. Diese liegt beispielsweise etwa an einem Beginn des zweiten Gehäusebereichs 20 oder an dem ersten Gehäusebereich 18. Grundsätzlich sind auch weitere Anordnungen der Verschlussposition denkbar. Beispielsweise kann auch eine Verschlussposition 106" oberhalb bzw. stromaufwärts des Kernelements 44 bereitgestellt sein.

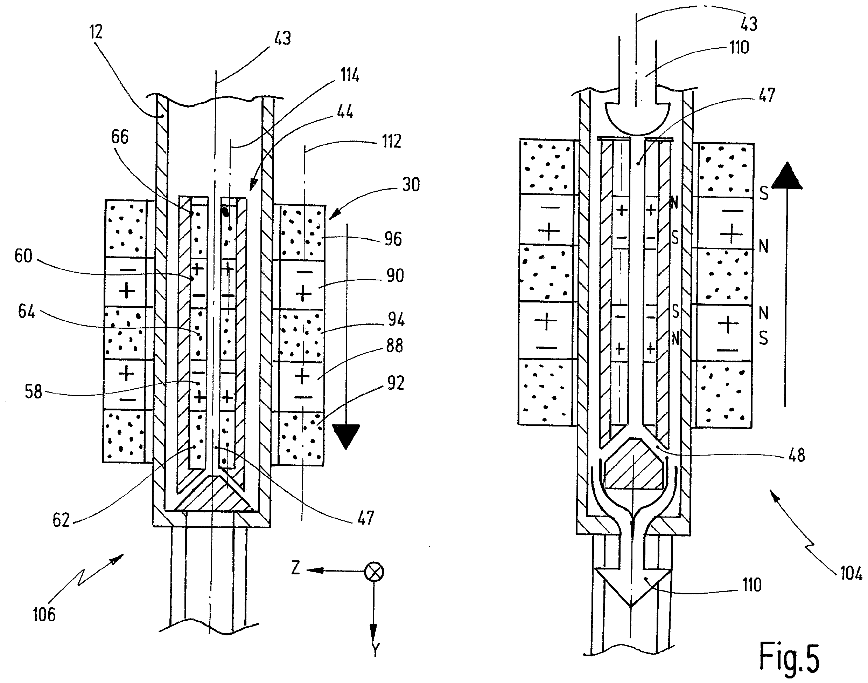

Fig. 5 zeigt eine Möglichkeit für die Anordnung der Kernmagnete 58, 60 und der Betätigungsmagnete 88, 90. In der Fig. 5 ist links die Verschlussposition 106 und rechts die entsprechende Öffnungsposition 104 dargestellt.

Negative Pole S sind mit einem "Minus" gekennzeichnet. Positive Pole N sind mit einem "Plus" gekennzeichnet.

Ein schematisch anhand von Pfeilen dargestelltes Fluid 110, insbesondere ein pharmazeutisches oder kosmetisches Fluid, tritt durch die Eintrittsöffnung 14 in das Gehäuse 12 ein und kann durch die Innenaussparung 47 strömen. In der rechts dargestellten Öffnungsposition 4 kann so das Fluid durch die Innenaussparung 47 und die Austrittsabschnitte 48 wieder aus dem Kernelement 44 austreten und letztlich in den zweiten Gehäusebereich 70 in Richtung der Austrittsöffnung 16 gelangen.

In der Fig. 5 sind beispielhaft Möglichkeiten für die Anordnung der Magnete und ihrer Polachsen dargestellt. Wie zu erkennen ist, sind die Polachsen 112 der Betätigungsmagnete 88, 90 parallel zu der Y-Achse, d.h., parallel zu der Längsachse 43, ausgebildet. Gleiches gilt für die Polachsen der Kernmagnete 58, 60, die ebenfalls parallel zu der Längsachse 43 verlaufen. Die Polachsen der Betätigungsmagnete 88, 90 sind mit 112 bezeichnet. Die Polachsen der Kernmagnete 58, 60 sind mit 114 bezeichnet. Die Polachsen 112, 114 sind lediglich schematisch angedeutet. Da es sich bei den Kernmagneten 58, 60 und Betätigungsmagneten 88, 90 um Ringelemente handelt, könnten die Polachsen 112, 114 auch koaxial mit der Längsachse 43 eingezeichnet sein. Wie zu erkennen ist, sind die Pole des ersten Betätigungsmagneten 88 und des zweiten Betätigungsmagneten 90 gegensinnig ausgebildet. Gleiches gilt für die Pole des ersten Kernmagneten 58 und des zweiten Kernmagneten 60, die ebenfalls gegensinnig ausgebildet sind. Gleichzeitig ist dem ersten Betätigungsmagneten 88 der erste Kernmagnet 58 zugeordnet. Diese Magnete sind wiederum gegensinnig gepolt. Gleiches gilt für den zweiten Betätigungsmagneten 90 und den zweiten Kernmagneten 60, die ebenfalls gegensinnig gepolt sind. Die Betätigungsringelemente dienen zum Verstärken der Magnetfelder. Dadurch ergeben sind Magnetfeldlinien, die an zumindest drei Orten, jeweils in etwa auf Höhe der Betätigungsringelemente bzw. Kernringelemente, senkrecht durch eine Wand des Gehäuses 12 verlaufen, so das eine starke Kopplung von Betätigungselement 30 und Kernelement 44 gegeben ist. Auf diese Weise ist es zuverlässig möglich, durch eine Bewegung der Betätigungsanordnung 30 das Kernelement 44 parallel zu der Längsachse 43 bzw. der Y-Achse zu versetzen.

## Patentansprüche

1. Füllnadel (10) zum Befüllen eines Behälters (34) mit einem Fluid (110), insbesondere einem pharmazeutischen oder kosmetischen Fluid, mit einem Gehäuse (12), wobei sich das Gehäuse (12) entlang einer Längsachse (43) erstreckt und eine Eintrittsöffnung (14) und eine Austrittsöffnung (16) aufweist, einem Kernelement (44), das innerhalb des Gehäuses (12) parallel zu der Längsachse (43) zwischen einer Öffnungsposition (104) und einer Verschlussposition (106) verschiebbar angeordnet ist, einem Stempelelement (102), das mit dem Kernelement (44) gekoppelt ist, wobei das Stempelelement (102) die Austrittsöffnung (16) in der Verschlussposition (106) verschließt und in der Öffnungsposition (104) freigibt, und einer Betätigungsanordnung (30) zum Verschieben des Kernelements (44) zwischen der Öffnungsposition (104) und der Verschlussposition (106), wobei das Kernelement (44) mindestens einen als Permanentmagnet ausgebildeten Kernmagneten (58, 60) aufweist, wobei die Betätigungsanordnung (30) außerhalb des Gehäuses (12) angeordnet ist und mindestens einen als Permanentmagnet ausgebildeten Betätigungsmagneten (88, 90) aufweist, und wobei der mindestens eine Kernmagnet (58, 60) und der mindestens eine Betätigungsmagnet (88, 90) derart angeordnet sind, dass sie anziehend zusammenwirken und das Kernelement (44) und die Betätigungsanordnung (30) gemeinsam parallel zu der Längsachse (43) verschiebbar sind, wobei das Kernelement (44) eine Innenaussparung aufweist, um eine Fluidverbindung zwischen der Eintrittsöffnung (14) und der Austrittsöffnung (16) in der Öffnungsposition (104) bereitzustellen, wobei der mindestens eine Kernmagnet (58, 60) ringförmig ausgebildet ist und die Innenaussparung umschließt, **dadurch gekennzeichnet, dass** das Kernelement (44) ein Innenelement (54) und ein Außenelement (56) aufweist, wobei das Innenelement (54) und das Außenelement (56) im Wesentlichen rotationssymmetrisch und hülsenförmig ausgebildet sind, wobei das Innenelement (54) mit dem Außenelement (56) verpresst ist, wobei das Innenelement (54) und das Außenelement (56) zwischen sich einen Zwischenraum (57) ausbilden, wobei der mindestens eine Kernmagnet (58, 60) in dem Zwischenraum (57) angeordnet ist, wobei das Innenelement (54) und das Außenelement (56) jeweils hülsenförmig und rotationssymmetrisch ausgebildet sind, wobei das Innenelement (54) und das Außenelement (56) jeweils in einer die Längsachse (43) aufweisenden Querschnittsebene im Wesentlichen Z-förmig ausgebildet sind, und wobei des Weiteren ein oberes Abschlusselement (68), das mit dem Außenelement (56) verpresst ist, und ein unteres Abschlusselement (70), das mit dem Innenelement (54) verpresst ist, vorgesehen sind, wobei zum Abdichten der Innenaussparung (47) und damit des Bereichs, in dem das Fluid geführt wird, Dichtungsringe (72, 73, 74, 75) angeordnet sind, um die Pressflächen abzudichten.

2. Füllnadel nach Anspruch 1, **dadurch gekennzeichnet, dass** die Betätigungsanordnung (30) hülsenförmig ausgebildet ist, wobei die hülsenförmige Betätigungsanordnung (30) einen Axialabschnitt (22) des Gehäuses (12) umgibt.

3. Füllnadel nach Anspruch 1 oder 2, **dadurch gekennzeichnet, dass** der mindestens eine Betätigungsmagnet (88, 90) ringförmig ausgebildet ist und das Gehäuse (12) umschließt.

4. Füllnadel nach einem der Ansprüche 1 bis 3, **dadurch gekennzeichnet, dass** das Kernelement (44) mehrere Kernmagnete aufweist, wobei die Betätigungsanordnung (30) mehrere Betätigungsmagnete aufweist, und wobei eine Anzahl der Betätigungsmagnete und der Kernmagnete identisch ist.

5. Füllnadel nach einem der Ansprüche 1 bis 4, **dadurch gekennzeichnet, dass** das Kernelement (44) eine Mehrzahl von Kernringelementen (62, 64, 66) aufweist, wobei jedes Kernringelement (62, 64, 66) aus mindestens einem paramagnetischen und/oder ferromagnetischen Material ausgebildet ist, und wobei die Mehrzahl von Kernringelementen (62, 64, 66) und der mindestens eine Kernmagnet (58, 60) in axialer Richtung abwechselnd angeordnet sind, und dass die Betätigungsanordnung (30) eine Mehrzahl von Betätigungsringelementen (92, 94, 96) aufweist, wobei jedes Betätigungsringelementen (92, 94, 96) aus mindestens einem paramagnetischen und/oder ferromagnetischen Material ausgebildet ist, und wobei die Mehrzahl von Betätigungsringelementen (92, 94, 96) und der mindestens eine Betätigungsmagnet (88, 90) in axialer Richtung abwechselnd angeordnet sind.

6. Füllnadel nach Anspruch 5, **dadurch gekennzeichnet, dass** das Kernelement (44) eine gerade Anzahl von Kernmagneten (58, 60) und eine ungerade Anzahl von Kernringelementen (62, 64, 66) aufweist, und dass die Betätigungsanordnung (30) eine gerade Anzahl von Betätigungsmagneten (88, 90) und eine ungerade Anzahl von Betätigungsringelementen (92, 94, 96) aufweist.

7. Füllnadel nach Anspruch 6, **dadurch gekennzeichnet, dass** das Kernelement (44) zwei Kernmagnete und drei Kernringelemente (62, 64, 66) aufweist, und dass die Betätigungsanordnung (30) zwei Betätigungsmagnete und drei Betätigungsringelemente aufweist.

8. Füllnadel nach einem der Ansprüche 1 bis 7, **dadurch gekennzeichnet, dass** eine Polachse (114) des mindestens einen Kernmagneten (58, 60) und eine Polachse (112) des mindestens einen Betätigungsmagneten (88, 90) parallel zu der Längsachse (43) des Gehäuses (12) angeordnet sind, wobei die Polachse (114) des mindestens einen Kernmagneten (58, 60) und die Polachse (112) des mindestens einen Betätigungsmagneten (88, 90) gegensinnig gepolt sind.

9. Füllnadel nach einem der Ansprüche 1 bis 8, **dadurch gekennzeichnet, dass** die Betätigungsanordnung (30) einen ersten Betätigungsmagneten (88) und einen zweiten Betätigungsmagneten (90) aufweist, wobei die Polachsen (112) der Betätigungsmagnete (88, 90) parallel zu der Längsachse (43) verlaufen, und wobei der erste Betätigungsmagnet (88) und der zweite Betätigungsmagnet (90) gegensinnig gepolt sind, wobei das Kernelement (44) einen ersten Kernmagneten (58) aufweist, der dem ersten Betätigungsmagneten (88) zugeordnet ist und gegensinnig zu diesem gepolt ist, und wobei das Kernelement (44) einen zweiten Kernmagneten (60) aufweist, der dem zweiten Betätigungsmagneten (90) zugeordnet ist und gegensinnig zu diesem gepolt ist.

10. Füllnadel nach einem der Ansprüche 1 bis 9, **dadurch gekennzeichnet, dass** das Stempelelement (102) ein die Austrittsöffnung (16) innenseitig verschließendes oder ein die Austrittsöffnung (16) außenseitig verschließendes Stempelelement (102) ist.

11. Füllnadel nach einem der Ansprüche 1 bis 10, **dadurch gekennzeichnet, dass** die Betätigungsanordnung (30) pneumatisch, hydraulisch oder elektrisch angetrieben ist.

12. Füllnadel nach einem der Ansprüche 1 bis 11, **dadurch gekennzeichnet, dass** die Betätigungsanordnung (30) über eine Hebeleinrichtung angetrieben ist.

13. Füllanlage mit mindestens einer Füllnadel nach einem der Ansprüche 1 bis 12.

## Claims

1. Filling needle (10) for filling a container (34) with a fluid (110), in particular a pharmaceutical or cosmetic fluid, having a housing (12), wherein the housing (12) extends along a longitudinal axis (43) and has an inlet opening (14) and an outlet opening (16), having a core element (44) which is arranged within the housing (12) so as to be displaceable parallel to the longitudinal axis (43) between an opening position (104) and a closure position (106), having a plunger element (102) which is coupled to the core element (44), wherein the plunger element (102) closes the outlet opening (16) in the closure position (106) and opens up the outlet opening (16) in the opening position (104), and having an actuating arrangement (30) for the displacement of the core element (44) between the opening position (104) and the closure position (106), wherein the core element (44) has at least one core magnet (58, 60) in the form of a permanent magnet, wherein the actuating arrangement (30) is arranged outside the housing (12) and has at least one actuating magnet (88, 90) in the form of a permanent magnet, and wherein the at least one core magnet (58, 60) and the at least one actuating magnet (88, 90) are arranged so as to interact with an attractive action, and the core element (44) and the actuating arrangement (30) are displaceable jointly parallel to the longitudinal axis (43), wherein the core element (44) has an internal cutout in order to provide a fluidic connection between the inlet opening (14) and the outlet opening (16) in the opening position (104), wherein the at least one core magnet (58, 60) is of ring-shaped form and surrounds the internal cutout, **characterized in that** the core element (44) has an inner element (54) and an outer element (56), wherein the inner element (54) and the outer element (56) are of substantially rotationally symmetrical and sleeve-like form, wherein the inner element (54) is connected to the outer element (56) by way of a pressing action, wherein the inner element (54) and the outer element (56) between them form an intermediate space (57), wherein the at least one core magnet (58, 60) is arranged in the intermediate space (57), wherein the inner element (54) and the outer element (56) are each of sleeve-like and rotationally symmetrical form, wherein the inner element (54) and the outer element (56) are each substantially Z-shaped in a cross-sectional plane having the longitudinal axis (43), and wherein furthermore an upper closure element (68), which is connected to the outer element (56) by a pressing action, and a lower closure element (70), which is connected to the inner element (54) by way of a pressing action, are provided, wherein, for the sealing of the internal cutout (47) and thus of the region in which the fluid is conducted, sealing rings (72, 73, 74, 75) are arranged so as to seal off the pressing surfaces.

2. Filling needle according to Claim 1, **characterized in that** the actuating arrangement (30) is of sleeve-like form, wherein the sleeve-like actuating arrangement (30) surrounds an axial section (22) of the housing (12).

3. Filling needle according to Claim 1 or 2, **characterized in that** the at least one actuating magnet (88, 90) is of ring-shaped form and surrounds the housing (12).

4. Filling needle according to one of Claims 1 to 3, **characterized in that** the core element (44) has multiple core magnets, wherein the actuating arrangement (30) has multiple actuating magnets, and wherein a number of actuating magnets and core magnets is identical.

5. Filling needle according to one of Claims 1 to 4, **characterized in that** the core element (44) has a multiplicity of core ring elements (62, 64, 66), wherein each core ring element (62, 64, 66) is formed from at least one paramagnetic and/or ferromagnetic material, and wherein the multiplicity of core ring elements (62, 64, 66) and the at least one core magnet (58, 60) are arranged in alternating fashion in an axial direction, and **in that** the actuating arrangement (30) has a multiplicity of actuating ring elements (92, 94, 96), wherein each actuating ring element (92, 94, 96) is formed from at least one paramagnetic and/or ferromagnetic material, and wherein the multiplicity of actuating ring elements (92, 94, 96) and the at least one actuating magnet (88, 90) are arranged in alternating fashion in an axial direction.

6. Filling needle according to Claim 5, **characterized in that** the core element (44) has an even number of core magnets (58, 60) and an odd number of core ring elements (62, 64, 66), and **in that** the actuating arrangement (30) has an even number of actuating magnets (88, 90) and an odd number of actuating ring elements (92, 94, 96).

7. Filling needle according to Claim 6, **characterized in that** the core element (44) has two core magnets and three core ring elements (62, 64, 66), and **in that** the actuating arrangement (30) has two actuating magnets and three actuating ring elements.

8. Filling needle according to one of Claims 1 to 7, **characterized in that** a pole axis (114) of the at least one core magnet (58, 60) and a pole axis (112) of the at least one actuating magnet (88, 90) are arranged parallel to the longitudinal axis (43) of the housing (12), wherein the pole axis (114) of the at least one core magnet (58, 60) and the pole axis (112) of the at least one actuating magnet (88, 90) are of opposite polarity.

9. Filling needle according to one of Claims 1 to 8, **characterized in that** the actuating arrangement (30) has a first actuating magnet (88) and a second actuating magnet (90), wherein the pole axes (112) of the actuating magnets (88, 90) run parallel to the longitudinal axis (43), and wherein the first actuating magnet (88) and the second actuating magnet (90) are of opposite polarity, wherein the core element (44) has a first core magnet (58) which is assigned to the first actuating magnet (88) and which is of opposite polarity with respect to said first actuating magnet, and wherein the core element (44) has a second core magnet (60) which is assigned to the second actuating magnet (90) and which is of opposite polarity with respect to said second actuating magnet.

10. Filling needle according to one of Claims 1 to 9, **characterized in that** the plunger element (102) is a plunger element (102) which closes off the outlet opening (16) at the inside or a plunger element (102) which closes off the outlet opening (16) at the outside.

11. Filling needle according to one of Claims 1 to 10, **characterized in that** the actuating arrangement (30) is pneumatically, hydraulically or electrically driven.

12. Filling needle according to one of Claims 1 to 11, **characterized in that** the actuating arrangement (30) is driven by way of a lever device.

13. Filling installation having at least one filling needle according to one of Claims 1 to 12.

## Revendications

1. Aiguille de remplissage (10) destinée à remplir un récipient (34) avec un fluide (110), notamment un fluide pharmaceutique ou cosmétique, ladite aiguille de remplissage comprenant un boîtier (12), ledit boîtier (12) s'étendant le long d'un axe longitudinal (43) et comportant une ouverture d'entrée (14) et une ouverture de sortie (16), un élément central (44) qui est disposé de manière à pouvoir coulisser entre une position d'ouverture (104) et une position de fermeture (106) à l'intérieur du boîtier (12) parallèlement à l'axe longitudinal (43), un élément formant piston (102) qui est accouplé à l'élément central (44), l'élément formant piston (102) fermant l'ouverture de sortie (16) dans la position de fermeture (106) et la libérant dans la position d'ouverture (104), et un ensemble d'actionnement (30) destiné à faire coulisser l'élément central (44) entre la position d'ouverture (104) et la position de fermeture (106), l'élément central (44) comportant au moins un aimant central (58, 60) conçu comme un aimant permanent, l'ensemble d'actionnement (30) étant disposé à l'extérieur du boîtier (12) et comportant au moins un aimant d'actionnement (88, 90) conçu comme un aimant permanent, et l'au moins un aimant central (58, 60) et l'au moins un aimant d'actionnement (88, 90) étant disposés de manière à coopérer en attraction et l'élément central (44) et l'ensemble d'actionnement (30) pouvant coulisser conjointement parallèlement à l'axe longitudinal (43), l'élément central (44) comportant un évidement intérieur pour réaliser une liaison fluidique entre l'ouverture d'entrée (14) et l'ouverture de sortie (16) dans la position d'ouverture (104), l'au moins un aimant central (58, 60) ayant une forme annulaire et entourant l'évidement intérieur, **caractérisée en ce que** l'élément central (44) comporte un élément intérieur (54) et un élément extérieur (56), l'élément intérieur (54) et l'élément extérieur (56) étant sensiblement à symétrie de révolution et en forme de manchon, l'élément intérieur (54) étant comprimé avec l'élément extérieur (56), l'élément intérieur (54) et l'élément extérieur (56) formant entre eux un espace intermédiaire (57), l'au moins un aimant central (58, 60) étant disposé dans l'espace intermédiaire (57), l'élément intérieur (54) et l'élément extérieur (56) étant chacun en forme de manchon et à symétrie de révolution, l'élément intérieur (54) et l'élément extérieur (56) étant chacun sensiblement en forme de Z dans un plan en coupe transversale comportant l'axe longitudinal (43), et un élément d'extrémité supérieur (68), qui est comprimé avec l'élément extérieur (56), et un élément d'extrémité inférieure (70), qui est comprimé avec l'élément intérieur (54), étant en outre prévus, des bagues d'étanchéité (72, 73, 74, 75) étant disposées pour étanchéifier l'évidement intérieur (47), et donc la zone dans laquelle le fluide est guidé, afin d'étanchéifier les surfaces de pression.

2. Aiguille de remplissage selon la revendication 1, **caractérisée en ce que** l'ensemble d'actionnement (30) est en forme de manchon, l'ensemble d'actionnement (30) en forme de manchon entourant une portion axiale (22) du boîtier (12).

3. Aiguille de remplissage selon la revendication 1 ou 2, **caractérisée en ce que** l'au moins un aimant d'actionnement (88, 90) est annulaire et entoure le boîtier (12).

4. Aiguille de remplissage selon l'une des revendications 1 à 3, **caractérisée en ce que** l'élément central (44) comporte une pluralité d'aimants centraux, l'ensemble d'actionnement (30) comportant une pluralité d'aimants d'actionnement, et un certain nombre d'aimants d'actionnement et d'aimants centraux étant identiques.

5. Aiguille de remplissage selon l'une des revendications 1 à 4, **caractérisée en ce que** l'élément central (44) comporte une pluralité d'éléments centraux annulaires (62, 64, 66), chaque élément central annulaire (62, 64, 66) étant formé à partir d'au moins un matériau paramagnétique et/ou ferromagnétique, et la pluralité d'éléments centraux annulaires (62, 64, 66) et l'au moins un aimant central (58, 60) étant disposés alternativement dans la direction axiale, et **en ce que** l'ensemble d'actionnement (30) comporte une pluralité d'éléments d'actionnement annulaires (92, 94, 96), chaque élément d'actionnement annulaire (92, 94, 96) étant formé à partir d'au moins un matériau paramagnétique et/ou ferromagnétique, et la pluralité d'éléments d'actionnement annulaires (92, 94, 96) et l'au moins un aimant d'actionnement (88, 90) étant disposés alternativement dans la direction axiale.

6. Aiguille de remplissage selon la revendication 5, **caractérisée en ce que** l'élément central (44) comporte un nombre pair d'aimants centraux (58, 60) et un nombre impair d'éléments centraux annulaires (62, 64, 66), et **en ce que** l'ensemble d'actionnement (30) comporte un nombre pair d'aimants d'actionnement (88, 90) et un nombre impair d'éléments d'actionnement annuaires (92, 94, 96).

7. Aiguille de remplissage selon la revendication 6, **caractérisée en ce que** l'élément central (44) comporte deux aimants centraux et trois éléments centraux annulaires (62, 64, 66), et **en ce que** l'ensemble d'actionnement (30) comporte deux aimants d'actionnement et trois éléments d'actionnement annulaires.

8. Aiguille de remplissage selon l'une des revendications 1 à 7, **caractérisée en ce qu'**un axe polaire (114) de l'au moins un aimant central (58, 60) et un axe polaire (112) de l'au moins un aimant d'actionnement (88, 90) sont disposés parallèlement à l'axe longitudinal (43) du boîtier (12), l'axe polaire (114) de l'au moins un aimant central (58, 60) et l'axe polaire (112) de l'au moins un aimant d'actionnement (88, 90) ayant des pôles opposés.

9. Aiguille de remplissage selon l'une des revendications 1 à 8, **caractérisée en ce que** l'ensemble d'actionnement (30) comporte un premier aimant d'actionnement (88) et un deuxième aimant d'actionnement (90), les axes polaires (112) des aimants d'actionnement (88, 90) s'étendant parallèlement à l'axe longitudinal (43), et le premier aimant d'actionnement (88) et le deuxième aimant d'actionnement (90) ayant des pôles opposés, l'élément central (44) comportant un premier aimant central (58) qui est associé au premier aimant d'actionnement (88) et qui a une polarisation opposée à celle de ce dernier, et l'élément central (44) comportant un deuxième aimant central (60) qui est associé au deuxième aimant d'actionnement (90) et qui a une polarisation opposée à celle de ce dernier.

10. Aiguille de remplissage selon l'une des revendications 1 à 9, **caractérisée en ce que** l'élément formant piston (102) est un élément formant piston (102) qui ferme l'ouverture de sortie (16) du côté intérieur ou qui ferme l'ouverture de sortie (16) du côté extérieur.

11. Aiguille de remplissage selon l'une des revendications 1 à 10, **caractérisée en ce que** l'ensemble d'actionnement (30) est entraîné pneumatiquement, hydrauliquement ou électriquement.

12. Aiguille de remplissage selon l'une des revendications 1 à 11, **caractérisée en ce que** l'ensemble d'actionnement (30) est entraîné par un dispositif à levier.

13. Système de remplissage comprenant au moins une aiguille de remplissage selon l'une des revendications 1 à 12.
